**Europäisches Patentamt**

**European Patent Office**

**Office européen des brevets**

(19)

(11) Numéro de publication **0 040 283**

**A1**

(12)

# DEMANDE DE BREVET EUROPEEN

(21) Numéro de dépôt: **80401356.3**

(22) Date de dépôt: **24.09.80**

(51) Int. Cl.³: **B 01 J 2/04**
**C 04 B 5/02, B 22 F 9/10**

(30) Priorité: **20.05.80 FR 8011199**

(43) Date de publication de la demande:
**25.11.81 Bulletin 81/47**

(84) Etats contractants désignés:
**BE DE GB IT LU NL**

(71) Demandeur: **Gagneraud, Francis**
**Villa Montmorency 6, Allée des Tilleuls**
**F-75016 Paris(FR)**

(72) Inventeur: **Gagneraud, Francis**
**Villa Montmorency 6, Allée des Tilleuls**
**F-75016 Paris(FR)**

(74) Mandataire: **Cuer, André**
**CABINET CUER 30, rue de Léningrad**
**F-75008 Paris(FR)**

(54) **Procédé de production de granules sphéroidaux ou billes à partir de matières minérales en fusion, billes ainsi obtenues et leurs applications.**

(57) L'invention a trait à la préparation de granules sphéroï-daux ou billes à partir de matières minérales et métaux en fusion.

Selon le procédé, on fait déverser la matière fondue sur un cylindre rotatif, non refroidi, après passage éventuel sur table ou plaque inclinée d'alimentation, sans assurer aucun refroidissement, par moyen liquide ou gazeux, entre la coulée de matière et l'aire de réception où s'entassent les granules durs et sphériques qu'il suffit de classifier par criblage.

Application, notamment, à tous types de laitiers, spécia-lement aux laitiers d'acierie basiques, phosphatés ou non.

**EP 0 040 283 A1**

La présente invention a trait au domaine du traitement de
matières minérales et de métaux en fusion et concerne un procédé
d'obtention de granules d'indice de sphéricité élevé, notamment de
billes, à partir de produits minéraux fondus tels que : silicates
fondus, métaux et alliages à l'état liquide, verres et clinker en
fusion, et tout spécialement : laitiers métallurgiques dont les
laitiers de haut-fourneaux et d'acieries, phosphatés ou non, scories
fondues, etc.

On sait qu'un certain nombre de matières minérales, dont en
particulier les laitiers non phosphatés d'acieries (l'expression
"laitiers" englobant également les scories) représentent de très gros
tonnages de résidus dont seule une faible partie est utilisée. Les
traitements effectués jusqu'à ce jour sur ces matériaux permettent
d'obtenir des produits dont la valeur d'usage est relativement faible :
par exemple, granulats pour la confection de remblais et de couches
de chaussées, produits d'amendement pour les sols.

Dans les procédés destinés à obtenir des matériaux de granulométrie réduite à partir de matériaux fondus tels que des laitiers,
on fait généralement intervenir une dispersion sur tambour à ailettes,
refroidi convenablement, et l'on assure un refroidissement relativement intense de la masse fondue au moyen d'aspersion d'eau et/ou de
jets d'air froid. Les granulats de laitier solidifié ainsi obtenus
ont une structure poreuse et expansée, en particulier lorsqu'on incorpore à la masse fondue des agents porophores.

Lorsqu'on désire obtenir, à partir des laitiers fondus, des
produits non poreux et durs, de structure compacte, comme par exemple
des sables de décapage de grande valeur d'usage, il faut procéder à
des concassages et broyages des matériaux récupérés en fosse : or,
ces opérations consomment une importante quantité d'énergie et provoquent une usure démesurée des appareils mis en oeuvre du fait de
l'extrême abrasivité des matériaux.

Il a maintenant été trouvé, à la suite d'essais industriels,
qu'il était possible d'obtenir directement à partir des matières
minérales en fusion, sans nécessité de concassage ou broyage ultérieur,
des produits sphériques très durs analogues à des billes dont les
diamètres peuvent descendre jusqu'à une fourchette de granulométrie
très faible et resserrée.

Selon le nouveau procédé de l'invention, on fait déverser la matière fondue sur un dispositif rotatif sans assurer aucun refroidissement, par moyen liquide ou gazeux, entre la coulée de matière et l'aire de réception où s'entassent les matériaux après déchiquetage par le dispositif rotatif et projection dans l'atmosphère.

On a ainsi constaté qu'en opérant sans aucun apport d'agent de refroidissement, tant sur le trajet de déversement de la masse fondue qu'au niveau du système rotatif, et à condition de maintenir une vitesse minimum pour ce dernier, on obtenait en fosse ou sur l'aire de réception un produit constitué quasi-exclusivement de billes très dures ou d'éléments sphéroïdaux offrant de larges possibilités d'application.

Le système rotatif est réalisé de façon à résister à l'élévation de température. En pratique on utilise un corps solide tournant suivant un axe horizontal. Ce corps peut être plein ou creux, à paroi épaisse, ou évidé. S'il est de forme polygonale, les arêtes servent au découpage de la matière en fusion ; dans le cas où l'on utilise un corps cylindrique plein ou creux, il faut le munir de pales dont le nombre peut varier de 2 à 16 suivant les besoins (brevets français n° 80.08368 et 80.08477 des 15 et 16 avril 1980).

Lorsque le système rotatif est un corps évidé, celui-ci se compose avantageusement de deux flasques sur lesquels s'appuient des lames épaisses dont le nombre peut également varier. Dans chaque cas, les extrémités des arêtes, des pales ou des lames, décrivent des surfaces de révolution cylindriques dont le diamètre peut varier par exemple de 150 à 800 mm.

En choisissant convenablement les caractéristiques du corps tournant (longueur, diamètre de la surface de révolution, nombre de pales d'éléments tranchants, vitesse de rotation...) il est possible d'obtenir des matériaux sphéroïdaux dont les dimensions s'étagent entre 0,1 et 5 mm, ou parfois plus jusqu'à 10 mm. Quand on désire produire des billes de diamètre inférieur à 5 mm, il est nécessaire que la vitesse périphérique des pales ou éléments tranchants ne descende pas en dessous de 10 mètres/seconde, le nombre de passages de pales par seconde devant un point fixe (par exemple l'extrémité d'une plaque d'alimentation s'il y en a une comme dit ci-après) étant au minimum de 40.

En pratique, la matière en fusion est déversée directement de sa poche de coulée, d'une rigole d'évacuation ou encore d'un réservoir intermédiaire à débordement sur le corps tournant à grande vitesse. Selon une variante, le flot de matière fondue est envoyé sur un plan incliné ou table d'alimentation du type plaque d'acier de forte épaisseur, de façon connue en soi mais ici sans assurer de refroidissement par circulation d'eau, avant l'écoulement sur le système rotatif. On peut ainsi régulariser la largeur et l'épaisseur de la lame de matière arrivant sur le corps tournant.

Durant la mise en oeuvre du procédé, on ne constate pas de formation de poussières ni d'ailleurs la production de vapeur d'eau du fait qu'aucune injection d'eau de refroidissement n'est pratiquée dans la masse de matière fondue.

A titre d'exemple non limitatif de réalisation, on a été amené à traiter un laitier d'acierie LD (comportant encore de l'acier liquide en suspension) coulant sur une plaque d'alimentation non refroidie avec un débit de 10 à 60 tonnes par mètre de longueur de système rotatif et parvenant à un cylindre plein équipé de 12 pales et tournant à la vitesse de 900 tours par minute. Les extrémités des pales décrivaient une surface de révolution cylindrique de 600 mm de diamètre. La vitesse périphérique des extrémités des pales était de 28,3 m/seconde et la fréquence de passage des pales devant l'extrémité de la table était de 180 coups par seconde.

Le laitier LD en fusion contenait en suspension du métal liquide non décanté. On a obtenu sur l'aire de réception, après déchiquetage de la matière par le système rotatif et projection des particules dans l'atmosphère, un matériau composé en majeure partie de granules sphéroïdaux ne dépassant pas 5 mm ; les granules présentant le plus grand indice de sphéricité étaient de diamètre inférieur à 3 mm ; il n'y avait pas de granules de dimension inférieure à 0, 1 mm.

Par simple séparation magnétique on a extrait les particules métalliques et les particules riches en oxyde ferromagnétique.

Les granules non magnétiques, composés uniquement de laitier, avaient l'apparence de billes compactes à aspect vitrifié en surface, de grande résistance aux chocs et à l'écrasement ; leur indice de microdureté était compris entre 600 et 1000 Vickers soit entre 6 et 7 à l'échelle Mohs. Par criblage on a pu obtenir des classes granulométriques très resserrées telles que : 0,1 à 0,25 mm ; 0,25 à 0,50 mm ; 0,50 à 1 mm ; 1 à 2 mm ; 2 à 3 mm... etc.

Les produits obtenus selon le procédé de l'invention présentent des caractéristiques physico-chimiques intéressantes. En particulier, dans le cas de laitiers, les granules sont très compacts du fait qu'aucun agent expansif n'a été utilisé. La masse volumétrique des grains est comprise entre 3 000 et 3 500 kg/m$^3$ suivant les classes granulométriques, la masse spécifique de la matière étant légèrement supérieure à 3 500 kg/m$^3$. Dans le cas des granules métalliques, la masse spécifique est plus importante du fait qu'ils sont composés de métal trempé présentant une microdureté qui dépasse celle des granules de laitiers. Les grains obtenus ont une surface vitrifiée et ne se désagrègent pas, même après immersion dans l'eau. Cette stabilité est due au refroidissement rapide de la matière.

Les domaines d'applications de ces granules sphéroïdaux sont très variés. Quelle que soit leur composition (métalliques ou à base de laitier) les granules de faible indice de sphéricité peuvent être utilisés comme produits de décapage des surfaces.

Les granules d'indice de sphéricité élevé sont utilisables dans les opérations de "peening" ou préparation de surface par martelage. Les granules à base de laitiers remplacent avantageusement le verre sphérulaire dans la fabrication des accumulateurs de chaleur, des capteurs d'énergie solaire par suite de leur grande résistance à l'écrasement (200 à 1000 Mégapascals selon la classe granulométrique). Ils peuvent entrer dans la confection de microbétons et de matières réfractaires ; ainsi on peut les incorporer dans des bétons à haute résistance dont les surfaces soumises à l'usure doivent rester lisses comme ceux utilisés pour les déversoirs hydrauliques et les canaux de fuite dont les surfaces doivent rester lisses.

Par ailleurs, les produits selon l'invention peuvent être recyclés dans la chaîne d'agglomération ou encore être utilisés comme engrais "retard" lorsqu'il s'agit de laitiers phosphatés.

Bien qu'illustré, dans l'exemple ci-dessus, pour le traitement de laitiers métallurgiques, le procédé susvisé s'applique à tous métaux ou alliages fondus ainsi qu'aux matières minérales en fusion telles que verres, céramiques, clinker de ciment fondu et particulièrement aux produits de moyenne et forte basicité.

5 · **0040283**

# R E V E N D I C A T I O N S

1. Procédé de production de granules sphéroïdaux d'indice de sphéricité élevé, notamment de billes à partir de matières minérales et métaux en fusion dont tout spécialement des laitiers et scories métallurgiques, caractérisé en ce que la matière fondue est déversée sur un dispositif rotatif projetant les particules déchiquetées dans l'atmosphère, ces dernières étant récupérées sur une aire de réception directement sous forme majoritaire de billes, sans qu'aucun moyen de refroidissement, gazeux ou liquide, ne soit prévu entre la coulée de la masse fondue et la réception en fosse.

2. Procédé selon la revendication 1, caractérisé en ce que la matière fondue tombe sur une plaque inclinée (ou table d'alimentation) servant de guide, non refroidi, avant son arrivée sur le dispositif rotatif.

3. Procédé selon l'une quelconque des revendications 1 à 3, caractérisé en ce que le système rotatif est constitué par un corps cylindrique ou polygonal plein ou creux à parois épaisses, muni de pales ou lames dont la vitesse périphérique est d'au moins 10 mètres/seconde.

4. Procédé selon la revendication 3, caractérisé en ce que le corps rotatif est évidé et se compose de deux flasques sur lesquels s'appuyent des lames horizontales épaisses dont les extrémités décrivent des surfaces de révolution cylindriques de diamètre 150 à 800 mm.

5. Billes de matières minérales, notamment de laitiers, obtenues selon le procédé de l'une quelconque des revendications 1 à 4, d'indice de dureté aù moins égal à 6 (échelle Mohs), aptes à être criblées selon une classification granulométrique très resserrée entre 0,1 et 5 mm.

6. Application des billes selon la revendication 5 comme agents de décapage et traitement de surfaces métalliques, additifs pour bétons et mortiers réfractaires, moyens de substitution au verre sphérulaire et engrais à action retard dans le cas de laitiers phosphatés.

Office européen
des brevets

**RAPPORT DE RECHERCHE EUROPEENNE**

| Catégorie | Citation du document avec indication, en cas de besoin, des parties pertinentes | Revendica-tion concernée |
|---|---|---|
| | **DOCUMENTS CONSIDERES COMME PERTINENTS** | |
| X | DE - A - 1 916 230 (R.G. SCHMITZ)<br><br>* Revendications 1,4; page 3, ligne 19 - page 4, ligne 10 *<br><br>-- | 1-4 |
| X | FR - A - 1 173 580 (J. KUZELA et al.)<br><br>* Résumé 1,4; page 2, colonne de gauche, dernier alinéa *<br><br>-- | 1,3-6 |
| A | FR - A - 1 551 368 (H. WINTER)<br>* Résumé 1-2,5-6,9-10 *<br><br>---- | 1 |

CLASSEMENT DE LA DEMANDE (Int. Cl.³)

B 01 J 2/04
C 04 B 5/02
B 22 F 9/10

DOMAINES TECHNIQUES RECHERCHES (Int. Cl.³)

B 01 J 2/04
C 04 B 5/02
B 22 F 9/10
C 21 B 3/06

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche<br>La Haye | Date d'achèvement de la recherche<br>29-07-1981 | Examinateur<br>SCHRUERS |
|---|---|---|

OEB Form 1503.1 06.78